# EUROPEAN PATENT APPLICATION

(11) **EP 2 497 398 A1**
(43) Date of publication of application: **12.09.2012**
(21) Application number: 11184649.9
(22) Date of filing: 11.10.2011
(51) Int. Cl.: A47J 31/56

(54) **Beverage making device**

(30) Priority: 07.03.2011 TW 100203999
(71) Applicant: Klub Manufacturing Corp., Luzhu Township, Taipei (TW)
(72) Inventor: Yang, Yen-Pin, Taoyuan County Taoyuan City (TW)
(74) Representative: Viering, Jentschura & Partner

(57) **Abstract**

A beverage making device includes a case (1), a first beverage making unit (2), a second beverage making unit (3) and a third beverage making unit (4), all of the three beverage making units (2, 3, 4) are installed to the case (1), and inlet pipes, outlet pipes and cables are connected between the units so as to save space required.

## Description

### FIELD OF THE INVENTION

The present invention relates to a beverage making device, and more particularly, to a beverage making device having three beverage-making units in one machine so as to save space and cost.

### BACKGROUND OF THE INVENTION

There are two types of conventional beverage making devices, one for making coffee and one for making tea. The processes for making coffee and tea are different so that the users have to prepare both of the two different beverage making devices.

The coffee making device uses coffee power which can be made by one process and the tea making device uses tea leaves which need time to have desired taste. Generally, the tea will be too strong in the first batch and then gradually thinner, and a good taste of the tea requires certain skill so that the tea making device involves multiple steps to make good tea.

Taiwan Patent Publication No. 459518 discloses a tea making device and comprises a case with a boiler received therein and a container is connected to the case. A pipe is connected between the boiler and the container. A filter is located in the container and has multiple orifices. When in use, the tea is ground into power and put on the filter and hot water is put in the boiler which is then connected to the case and sealed. The water is heated under pressure in the boiler and the hot water passes the pipe and the filter so as to have the tea within short time.

The tea making device mentioned above uses hot water and steam to make the tea, but cannot control the operation time and volume of the water so that the quality of the tea is not satisfied.

Taiwan Patent Publication No. M269834 discloses a coffee making device and comprises a case with an inner container for receiving water and the inner container includes a spiral metal tube and a heater. A water tank is located on the top of the case and a control unit is located at the bottom of the case. Multiple pipes are in communication between the water container, the control unit and the inner container. By the control of the control unit, the water is supplied to the inner container and the water is heated to make coffee.

However, the spiral metal tine has a small caliber and is easily stocked by water scale which is difficult to remove, so that the coffee making device has to be sent to the local dealer to clean the spiral metal tube often or even be discarded.

The present invention intends to provide a beverage making device which improves the shortcomings of the conventional ones.

### SUMMARY OF THE INVENTION

The present invention relates to a beverage making device and comprises a case, a first beverage making unit, a second beverage making unit and a third beverage making unit. The case has a main inlet pipe and a motor which is connected with the main inlet pipe. The main inlet pipe is connected with a first inlet pipe, a second inlet pipe and a third inlet pipe. The first inlet pipe is connected with an electro-magnetic valve and the second inlet pipe is connected with a first flow meter. The first beverage making unit has a first boiler which has an indirect heating pipe and a first heater. The indirect heating pipe extends through the first boiler and is isolated from the interior of the first boiler. The first boiler is connected with the first inlet pipe and the indirect heating pipe is connected to the second inlet pipe. The indirect heating pipe is connected with a first outlet pipe and a first treatment head. The second beverage making unit has a second boiler connected with the third inlet pipe. The second boiler has a second heater, a second outlet pipe and a second treatment head. The second outlet pipe is connected with a second flow meter. The third beverage making unit has a third outlet pipe and a barrel. The third outlet pipe is connected with a third flow meter and the second boiler.

Preferably, the first boiler has a probe for detecting water level and a steam outlet.

Preferably, the second boiler has a temperature controller.

The primary object of the present invention is to provide a beverage making device wherein the first, second and third beverage making units are installed to the case, and the inlet pipes, outlet pipes and the cables are connected between the units so as to save space required.

Another object of the present invention is to provide a beverage making device, wherein the caliber of the indirect heating pipe is large enough to have better heat exchange and also benefit for cleaning the water scale.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the beverage making device of the present invention, and
Fig. 2 shows the arrangement of the parts of the beverage making device of the present invention.

### DETAILED DESCRIPTION OF THE PREFERRED EMBODIMENT

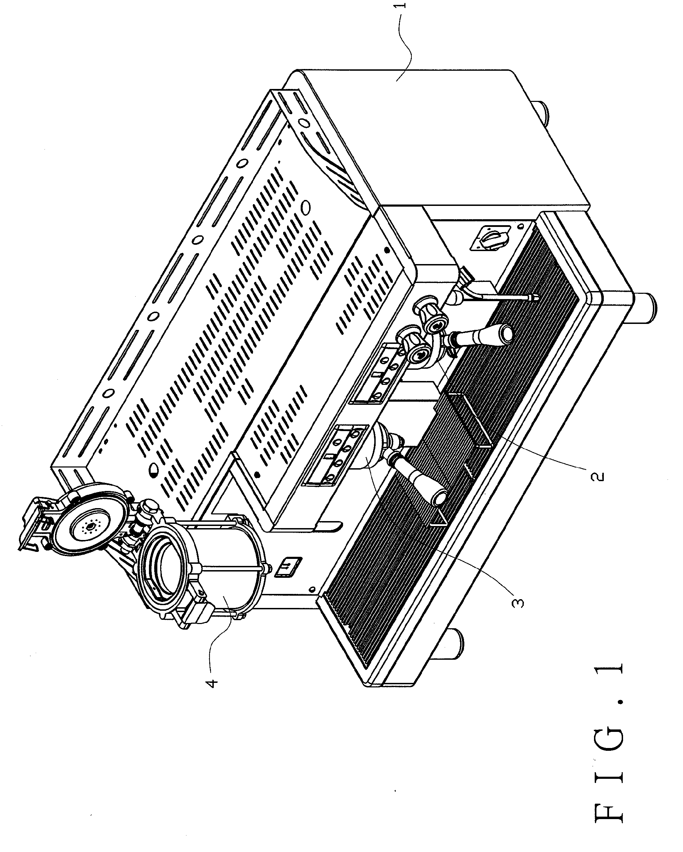

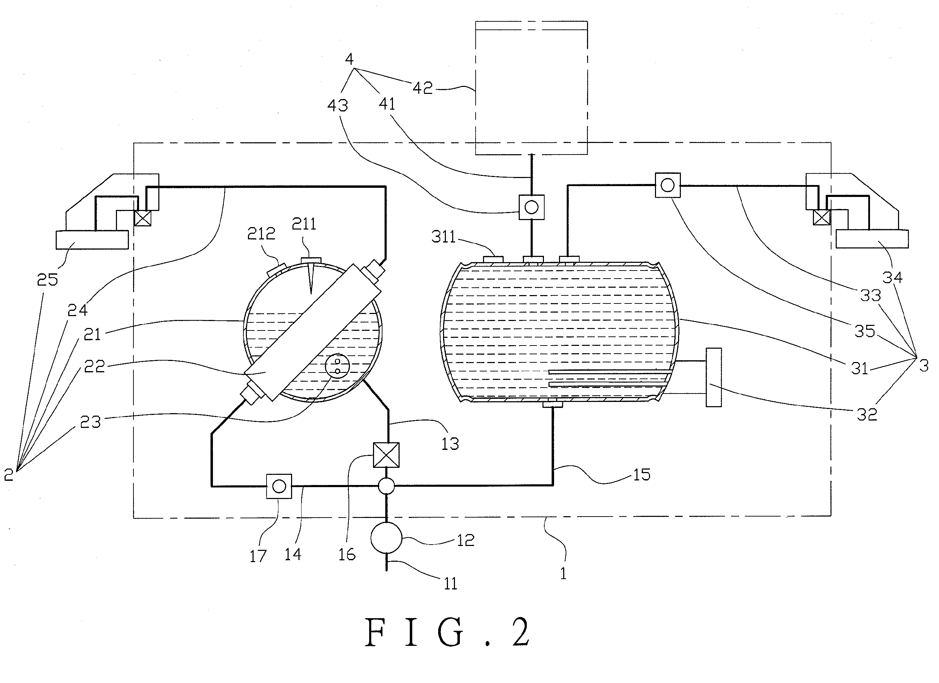

Referring to Figs. 1 and 2, the beverage making device of the present invention comprises a case 1, a first beverage making unit 2, a second beverage making unit 3 and a third beverage making unit 4.

The case 1 has a main inlet pipe 11 and a motor 12 which is connected with the main inlet pipe 11. The main inlet pipe 11 is connected with a first inlet pipe 13, a second inlet pipe 14 and a third inlet pipe 15. The first inlet pipe 13 is connected with an electro-magnetic valve 16 and the second inlet pipe 14 is connected with a first flow meter 17.

The first beverage making unit 2 has a first boiler 21 which has an indirect heating pipe 22 and a first heater 23. The indirect heating pipe 22 extends through the first boiler 21 and is isolated from an interior of the first boiler 21. The first boiler 21 is connected with the first inlet pipe 13 and the indirect heating pipe 22 is connected to the second inlet pipe 14. The indirect heating pipe 22 is connected with a first outlet pipe 24 and a first treatment head 25. The first boiler 21 has a probe 211 and a steam outlet 212, wherein the probe 211 detects water level.

The second beverage making unit 3 has a second boiler 31 connected with the third inlet pipe 15. The second boiler 31 has a second heater 32, a second outlet pipe 33 and a second treatment head 34. The second outlet pipe 33 is connected with a second flow meter 35 and the second boiler 31 has a temperature controller 311.

The third beverage making unit 4 has a third outlet pipe 41 and a barrel 42. The third outlet pipe 41 is connected with a third flow meter 43 and the second boiler 31.

When in use, the motor 12 introduces cold water into the main inlet pipe 11 and the cold water is then sent to the first, second and third inlet pipes 13, 14, 15.

The first beverage making unit 2 is used to make coffee. When the cold water in the main inlet pipe 11 enters the first boiler 21 via the first inlet pipe 13 and is heated by the first heater 23. The probe 211 in the first boiler 21 controls the water level in the first boiler 21 at 70% to 80% height of the first boiler 21. The steam generated from the first boiler 21 is released from the steam outlet 212. When the cold water enters the indirect heating pipe 22 via the second inlet pipe 14, the hot water in the first boiler 21 indirectly heats the water in the indirect heating pipe 22 so that the water temperature reaches the optimum temperature for making coffee. The hot water is then released from the first treatment head 25 via the first outlet pipe 24 and the first flow meter 25 to make coffee.

The second beverage making unit 3 is used to make tea. When the cold water in the main inlet pipe 11 enters the second boiler 31 via the third inlet pipe 15 and is heated by the second heater 32. The temperature controller 311 controls the temperature of the hot water which is then released from the second treatment head 34 via the second outlet pipe 33 and the second flow meter 35 to make tea.

The third beverage making unit 4 has a barrel 42 of large interior space for making tea. The second and third beverage making units 3, 4 share the second boiler 31, so that when the boiled water in the second boiler 31 is sent to the barrel 42 via the third outlet pipe 41 and the third flow meter 43, a significant amount of tea can be made in the barrel 42.

The first, second and third beverage making units 2, 3 and 4 are installed to the case l, and the inlet pipes, outlet pipes and the cables are connected between the units so as to save space required. The beverage making device is convenient for users to make different beverages. Besides, the large barrel 42 allows the users to make a lot amount of tea within one action.

While we have shown and described the embodiment in accordance with the present invention, it should be clear to those skilled in the art that further embodiments may be made without departing from the scope of the present invention.

## Claims

1. A beverage making device comprising:
a case (1) having a main inlet pipe (11) and a motor (12) which is connected with the main inlet pipe (11), the main inlet pipe (11) connected with a first inlet pipe (13), a second inlet pipe (14) and a third inlet pipe (15), the first inlet pipe (13) connected with an electro-magnetic valve (16) and the second inlet pipe (14) connected with a first flow meter (17), and **characterized in that** the beverage making device further comprises:
a first beverage making unit (2) disposed on the case (1), the first beverage making unit (2) having a first boiler (21) which has an indirect heating pipe (22) and a first heater (23), the indirect heating pipe (22) extending through the first boiler (21) and isolated from an interior of the first boiler (21), the first boiler (21) connected with the first inlet pipe (13) and the indirect heating pipe (22) connected to the second inlet pipe (14), the indirect heating pipe (22) connected with a first outlet pipe (24) and a first treatment head (25);
a second beverage making unit (3) disposed on the case (1), the second beverage making unit (3) having a second boiler (31) connected with the third inlet pipe (15), the second boiler (31) having a second heater (32), a second outlet pipe (33) and a second treatment head (34), the second outlet pipe (33) connected with a second flow meter (35), and
a third beverage making unit (4) disposed on the case (1), the third beverage making unit (4) having a third outlet pipe (41) and a barrel (42), the third outlet pipe (41) connected with a third flow meter (43) and the second boiler (31).

2. The device as claimed in claim 1, wherein the first boiler (21) has a probe (211) and a steam outlet (212) and the probe (211) is adapted to detect water level.

3. The device as claimed in claim 1, wherein the second boiler (31) has a temperature controller (311).
